(19) **Europäisches Patentamt / European Patent Office / Office européen des brevets**

(11) **EP 4 769 573 A1**

(12) **EUROPEAN PATENT APPLICATION**
published in accordance with Art. 153(4) EPC

(43) Date of publication:
01.07.2026 Bulletin 2026/27

(21) Application number: 25831203.2

(22) Date of filing: 18.06.2025

(51) International Patent Classification (IPC):
$H01M\ 4/62^{(2006.01)}$   $C01B\ 32/158^{(2017.01)}$
$H01M\ 4/13^{(2010.01)}$   $H01M\ 10/052^{(2010.01)}$
$H01M\ 4/04^{(2006.01)}$   $C01B\ 32/174^{(2017.01)}$
$H01M\ 4/136^{(2010.01)}$   $H01M\ 4/02^{(2006.01)}$

(52) Cooperative Patent Classification (CPC):
C01B 32/158; C01B 32/174; H01M 4/02;
H01M 4/04; H01M 4/13; H01M 4/131; H01M 4/136;
H01M 4/62; H01M 10/052; Y02E 60/10

(86) International application number:
PCT/KR2025/008439

(87) International publication number:
WO 2025/263993 (26.12.2025 Gazette 2025/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 18.06.2024 KR 20240079211
18.06.2024 KR 20240079212

(71) Applicant: LG Energy Solution, Ltd.
Seoul 07335 (KR)

(72) Inventors:
• BAEK, Doo Hyun
Daejeon 34122 (KR)
• JANG, Eun Ji
Daejeon 34122 (KR)
• CHUNG, Koo Seung
Daejeon 34122 (KR)
• KWON, Soon Hyung
Daejeon 34122 (KR)
• LEE, Nam Jeong
Daejeon 34122 (KR)
• SHIN, Dong Mok
Daejeon 34122 (KR)
• LEE, Ki Seok
Daejeon 34122 (KR)
• LEE, Ho Chan
Daejeon 34122 (KR)

(74) Representative: Hoffmann Eitle
Patent- und Rechtsanwälte PartmbB
Arabellastraße 30
81925 München (DE)

(54) **EXPANDABLE CARBON NANOTUBE POWDER, AND DRY ELECTRODE AND LITHIUM SECONDARY BATTERY COMPRISING SAME**

(57) The present invention relates to an expandable carbon nanotube powder including carbon nanotube units, wherein when electrical conductivity (S/cm) and packing density (g/cc) are plotted on a y-axis and an x-axis, respectively, slope is 95 or greater, and the electrical conductivity (S/cm) and the packing density (g/cc) are measured while applying a pressure ranging from 50 MPa to 420 MPa to the expandable carbon nanotube powder.

FIG.1

EP 4 769 573 A1

Description

## TECHNICAL FIELD

## Cross-reference to Related Applications

This application claims priority from Korean Patent Application Nos. 10-2024-0079211, filed on 6/18/2024, and 10-2024-0079212, filed on 6/18/2024, the disclosures of which are incorporated by reference herein.

## Technical Field

The present invention relates to an expandable carbon nanotube powder, and a dry electrode and a lithium secondary battery which include the same.

## BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices.

The secondary batteries are generally manufactured in a way that an electrode active material slurry is applied onto a positive electrode current collector and a negative electrode current collector to form an electrode active material layer, which is then subjected to drying and rolling to prepare a positive electrode and a negative electrode, and the positive electrode and the negative electrode are stacked on both sides of a separator to form an electrode assembly having a predetermined shape, and then the electrode assembly is accommodated in a battery case, an electrolyte is injected, and the battery case is sealed.

Meanwhile, as a solvent contained in the slurry evaporates in the process of drying the electrode active material slurry, defects, such as pinholes or cracks, may be generated in the electrode active material layer formed on the current collector. In addition, during the drying process, the electrode active material slurry is not dried uniformly at an internal portion and an external portion thereof, and thus a powder floating phenomenon may occur due to a difference in solvent evaporation rate. That is, powder present in a portion dried earlier may float and form a gap from a portion dried relatively later, resulting in degradation of electrode quality.

Therefore, to address the limitations described above, drying devices capable of controlling the evaporation rate of the solvent while allowing the inside and outside of the electrode active material slurry to be uniformly dried have been considered, but these drying devices are very expensive and require considerable cost and time for operation, and thus have poor manufacturing processability.

Meanwhile, the solvent contained in a typical electrode active material slurry is N-methyl-2-pyrrolidone (NMP), which has a high boiling point and thus requires high heat energy and a very long drying furnace to be dried, making it highly unsuitable for mass production. In addition, N-methyl-2-pyrrolidone (NMP) is a toxic substance and is harmful to living things, thereby failing to be environmentally friendly.

Therefore, there has been a recent trend of active research on dry electrodes in which electrodes are prepared without using solvents. The dry electrode is generally prepared by laminating a free-standing type electrode material mixture film, which includes an electrode active material, a binder, and a conductive material and is prepared in a form of a sheet, on a current collector. The electrode material mixture film involves a process in which, first, an electrode active material, a carbon material as a conductive material, and a fibrillizable binder are mixed together using a blender or the like, the binder is fibrillized by applying a shear force through a process such as jet-milling or kneading, and a free-standing film is then prepared by calendaring the obtained mixture into a film shape.

However, unlike a wet electrode in which an electrode active material, a conductive material, and a fibrillizable binder are mixed in a solvent, in the preparation of the dry electrode, the components are mixed in a solvent-free state, resulting in poor dispersibility of the conductive material. In this case, a method of first dispersing a conductive material to improve the dispersibility of the conductive material, and then mixing an electrode active material, the conductive material, and a fibrillizable binder has been suggested, but typical pre-dispersed conductive materials fail to satisfy specific physical properties and thus exhibit poor resistance characteristics.

Therefore, there remains a need for an expandable carbon nanotube powder that satisfies specific physical properties, thereby enabling excellent dispersibility of the conductive material.

## DISCLOSURE OF THE INVENTION

## TECHNICAL PROBLEM

The present invention is designed to overcome the limitations described above, and thus, an aspect of the present invention provides an expandable carbon nanotube powder having excellent electrical conductivity when used as a conductive material, by controlling physical properties thereof such that when electrical conductivity (S/cm) and packing density (g/cc), measured under a specific pressure range, are plotted on a y-axis and an x-axis, respectively, slope is 95 or greater.

Another aspect of the present invention, which is designed to overcome the limitations described above, provides a dry electrode and a lithium secondary battery having improved resistance characteristics and lifespan characteristics due to excellent electrical conductivity and mechanical properties, including the expandable carbon nanotube powder.

## TECHNICAL SOLUTION

[1] According to an aspect of the present invention, there is provided an expandable carbon nanotube powder including carbon nanotube units, wherein when electrical conductivity (S/cm) and packing density (g/cc) are plotted on a y-axis and an x-axis, respectively, slope is 95 or greater, and the electrical conductivity (S/cm) and the packing density (g/cc) are measured while applying a pressure ranging from 50 MPa to 420 MPa to the expandable carbon nanotube powder.

[2] The present invention provides the expandable carbon nanotube powder according to [1] above, wherein the slope may range from 100 to 125.

[3] The present invention provides the expandable carbon nanotube powder according to [1] or [2] above, wherein the expandable carbon nanotube powder may have a bulk density of 0.022 g/cc or less.

[4] The present invention provides the expandable carbon nanotube powder according to at least one of [1] to [3] above, wherein when the packing density of the expandable carbon nanotube powder is 1.0 g/cc, the electrical conductivity may be 70 S/cm or greater.

[5] The present invention provides the expandable carbon nanotube powder according to at least one of [1] to [4] above, wherein a ratio (TD/BD) of true density (TD) to bulk density (BD) of the expandable carbon nanotube powder may be 91 to 673.

[6] The present invention provides the expandable carbon nanotube powder according to at least one of [1] to [5] above, wherein the expandable carbon nanotube powder may have a true density (TD) of 1.850 g/cc to 2.500 g/cc.

[7] The present invention provides the expandable carbon nanotube powder according to at least one of [1] to [6] above, wherein the expandable carbon nanotube powder may have a BET specific surface area of 200 $m^2$/g to 1000 $m^2$/g.

[8] The present invention provides the expandable carbon nanotube powder according to at least one of [1] to [7] above, wherein the carbon nanotube units may be multi-walled carbon nanotube units.

[9] The present invention provides the expandable carbon nanotube powder according to at least one of [1] to [8] above, wherein the multi-walled carbon nanotube units may have an aspect ratio of 30 to 10000.

[10] The present invention provides the expandable carbon nanotube powder according to at least one of [1] to [9] above, wherein the multi-walled carbon nanotube units may have an average length of 0.1 $\mu$m to 100 $\mu$m.

[11] The present invention provides the expandable carbon nanotube powder according to at least one of [1] to [10] above, wherein the multi-walled carbon nanotube units may have an average diameter of 5 nm to 200 nm.

[12] The present invention provides the expandable carbon nanotube powder according to at least one of [1] to [11] above, wherein the multi-walled carbon nanotube units may have a BET specific surface area of 50 $m^2$/g to 500 $m^2$/g.

[13] The present invention provides the expandable carbon nanotube powder according to at least one of [1] to [12] above, wherein the multi-walled carbon nanotube units may have three or more graphene layers disposed in parallel with respect to an axis of the multi-walled carbon nanotube units.

[14] According to another aspect of the present invention, there is provided a dry electrode including the expandable carbon nanotube powder of at least one of [1] to [13] above.

[15] According to another aspect of the present invention, there is provided a lithium secondary battery including the dry electrode of [14] above.

## ADVANTAGEOUS EFFECTS

An expandable carbon nanotube powder according to the present invention forms an appropriately expanded pop-type without excessive cutting of carbon nanotubes, which is achieved by controlling slope to be 95 or greater when electrical conductivity (S/cm) and packing density (g/cc) are plotted on a y-axis and an x-axis, respectively.

In addition, a dry electrode and a lithium secondary battery including the expandable carbon nanotube powder according to the present invention may achieve excellent resistance characteristics and lifespan characteristics. This is attributed to the features described above, which enable a superior conductive network with excellent dispersibility within the dry electrode, as well as an increased contact area with an electrode active material.

## BRIEF DESCRIPTION OF THE DRAWINGS

The following drawings attached herein illustrate preferred examples of the present invention by example, and serve to enable technical concepts of the present invention to be further understood together with detailed description of the invention given below, and therefore the present invention should not be interpreted only with matters in such drawings. Meanwhile, the shape, size, scale or proportion of elements in the drawings as stated herein may be exaggerated for clarity.

FIG. 1 is a graph plotting electrical conductivity (S/cm) and packing density (g/cc) on a y-axis and an x-axis, respectively, where the two were measured while applying force from 200 kgf to 1600 kgf after expandable carbon nanotube powders prepared in Example 1 and Comparative Examples 1 to 3 were added into a circular mold having an area of $0.38 \text{ cm}^2$;
FIGS. 2 and 4 are SEM images of carbon nanotube aggregates; and
FIGS. 3 and 5 are SEM images of an expandable carbon nanotube powder.

## MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In this specification, the term "volume cumulative average particle diameter $D_{50}$" indicates a particle diameter at a cumulative volume of 50% in a particle size distribution curve of particles. The $D_{50}$ may be measured, for example, by using a laser diffraction method. The laser diffraction method generally allows the measurement of a particle size ranging from a submicron level to a few mm and may produce highly repeatable and high-resolution results.

In this specification, the term "average particle diameter" indicates an arithmetic mean value of particle diameters which is calculated after measuring the particle diameters of at least 30 particles observed in a scanning electron microscope image when observed by using a scanning electron microscope with a field of view of 5,000 times to 20,000 times. In this case, the particle diameter indicates a diameter of the longest axis of the particle. Although measurement methods of the "volume cumulative average particle diameter $D_{50}$" and the "average particle diameter" are different, their values may be derived similarly, and the volume cumulative average particle diameter $D_{50}$ measured in a powder state may have a similar value within an error range to the average particle diameter observed in the scanning electron microscope image of an electrode after the powder is prepared into the electrode.

In this specification, the term "material mixture composition" indicates a mixture including an electrode active material as well as a binder and optionally a conductive material, which is physically mixed to form a uniform dispersion phase, where it may be a mixture of powders, as a product of a mixing process according to this specification, and may be one in which substantially no solvent is involved. Herein, the fact that substantially no solvent is involved indicates that no solvent or only a trace amount of solvent is added when mixing the material mixture composition.

In this specification, the term "mixed aggregate" indicates one in which the mixture of powders is converted into a dough-like aggregate by being bonded or connected to each other while the binder is fibrillized by applying a shear force to the material mixture composition, where it, as a product of a kneading process according to this specification, may have a solid content substantially close to 100% and may include a small amount of solvent in some cases.

In this specification, the term "powder for an electrode" is a material in a state in which the mixed aggregate is ground to form powder by reducing a size of particles, where it may indicate an electrode material in a form of powder which includes the electrode active material as well as the binder and optionally the conductive material.

In this specification, the term "electrode material mixture film" may be one which is prepared in a form of a free standing type single sheet using an "electrode material mixture" including the electrode active material, the conductive material, and the binder without a solvent involved, or may indicate an electrode material mixture layer in a state of being laminated on the current collector. In this specification, the term 'free standing type' indicates that it may maintain its form independently without relying on other members and may be moved or handled on its own. The electrode material mixture film may be formed through compression of the powder for an electrode, as will be described later. For example, the powder for an electrode may be integrated through compression to form a layered structure.

4

In this specification, the term "powder-sheeting film" indicates a film after a sheet form is formed through a powder-sheeting process in which the powder for an electrode first passes through a pressing roll in a roll-to-roll process (e.g., calendaring process) and before passing through a last pressing roll in the roll-to-roll process, where it may be a free standing type sheet, but may be a sheet with relatively weak self-supporting ability. Herein, the term 'powder-sheeting' may indicate that the powder for an electrode is formed into the form of a free standing type sheet by the pressing roll of the roll-to-roll process, and the term 'sheeting' is a process performed in a process of preparing the electrode material mixture film from the powder-sheeting film, where it may indicate a process of roll pressing the powder-sheeting film.

In this specification, the term "three-dimensional fiber network structure" may indicate a structure that may be formed through fibrillization of a binder during the process of forming a sheet from a material mixture composition including an electrode active material and a binder into an electrode material mixture film. Specifically, the three-dimensional fiber network structure may indicate various structures in which microfibers formed by the fibrillization of a binder form a skeleton and thereby serve as a support that enables an electrode material mixture film to be a self-supporting film. In this case, the electrode active material and optionally the conductive material may be accommodated in pores formed in the three-dimensional fiber network structure.

In this specification, porosity may be calculated by Equation A below.

[Equation A]

$$\text{Porosity (\%)} = \{1 - (\text{electrode density/true density})\} \times 100$$

In Equation A above, the true density is calculated density derived from density and mass ratio of each component material constituting an electrode material mixture film, assuming that no pores are included, and the electrode density is measured density of an electrode material mixture film which is measured by taking a certain size of the electrode material mixture film.

Herein, the term "specific surface area ($m^2/g$)" is measured through a BET method, and specifically may be calculated from an amount of nitrogen gas adsorbed at a liquid nitrogen temperature (77 K) using BELSORP-mino II from BEL JAPAN, INC.

Unlike a wet electrode in which an electrode active material, a fibrillizable binder, and/or a conductive material are mixed in a solvent, in the preparation of a dry electrode, the components are mixed in a solvent-free state, causing poor dispersibility of the conductive material. In this case, a method of first dispersing a conductive material to improve the dispersibility of the conductive material, and then mixing an electrode active material, the conductive material, and a fibrillizable binder has been suggested. However, In the case of typical pre-dispersion of a conductive material, excessive cutting of the conductive material may occur due to excessive shear force in a solvent-free state, or the desired degree of dispersion may not be achieved, thereby resulting in poor resistance and lifespan characteristics.

The inventors, through persistent research to address the issues described above, found that excellent resistance and lifespan characteristics may be achieved by using an expandable carbon nanotube powder that satisfies specific physical properties, thereby completing the invention.

**Expandable Carbon Nanotube Powder**

An expandable carbon nanotube powder according to the present invention includes carbon nanotube units, where when electrical conductivity (S/cm) and packing density (g/cc) are plotted on a y-axis and an x-axis, respectively, slope is 95 or greater, and the electrical conductivity (S/cm) and the packing density (g/cc) are measured while applying a pressure ranging from 50 MPa to 420 MPa to the expandable carbon nanotube powder.

Unlike wet electrodes, which are dispersed and/or mixed in a solvent, dry electrodes, when prepared, involve dispersing and/or mixing a conductive material (e.g., carbon nanotubes) in a solvent-free state. The process of dispersing and/or mixing in a solvent-free state prevents buffering and dispersing actions of a solvent, resulting in excessive shear force, which may lead to excessive cutting of the conductive material or failure to achieve the desired degree of expansion. In particular, when preparing a dry electrode using a conductive material that is excessively cut or not dispersed, the formation of a conductive path within the electrode is limited, and a contact area with an electrode active material is reduced, resulting in degraded cell performance.

Accordingly, the present invention provides an expandable carbon nanotube powder having excellent dispersibility, achieved by forming an expandable structure without excessive cutting, through control over specific properties of the carbon nanotube powder so as to exhibit maximum efficiency within a dry electrode.

Specifically, the expandable carbon nanotube powder is different from carbon nanotubes aggregated at a high density or high-density carbon nanotube aggregates generally used in large-scale industries, and involves forming a kind of pop-type having an expandable structure without excessive cutting of carbon nanotubes. Desirably, unlike carbon nanotubes dispersed using an aqueous dispersion, the expandable carbon nanotube powder involves forming a pop-type

EP 4 769 573 A1

having an expandable carbon nanotube structure in a dry, solvent-free state without excessive cutting.

The pop-type indicates a form in which carbon nanotube aggregates aggregated at a high density are disaggregated and visually separated in a loose manner, resulting in increased space between carbon nanotubes increases, and connections between carbon nanotubes become loose, resulting in increased overall volume. For example, the expandable structure may form a kind of honeycomb structure having reduced density between carbon nanotubes, thereby exposing the surface of more carbon nanotubes to the outside.

Therefore, when preparing a dry electrode thereafter, including the expandable carbon nanotubes according to the present invention in a conductive material may be desirable in an aspect that a well-dispersed conductive network is formed while the continuity of the conductive network is maintained, thereby achieving excellent mechanical strength and resistance characteristics. For example, the expandable carbon nanotubes having an expandable structure, that are properly dispersed and have minimal cutting, may maintain excellent dispersibility while minimizing cutting during the subsequent dry electrode preparation process, thereby forming an excellent conductive network between and/or within electrode active materials in an electrode material mixture film, and sufficiently preventing conductive material aggregation that reduces conductive effects, leading to excellent resistance characteristics and lifespan characteristics.

In this case, the expandable carbon nanotube powder having a pop-type may be achieved through various methods, but desirably, achieved by controlling characteristics of carbon nanotubes, such as shape, diameter, length, and/or number of walls, or controlling conditions for disaggregating the carbon nanotubes.

In particular, the expandable carbon nanotube powder as described above may have low bulk density by forming an expanded structure, and accordingly, measuring electrical conductivity according to the packing density is difficult without applying a high force to ensure sufficient electrical contact between powders.

In the expandable carbon nanotube powder according to the present invention, when electrical conductivity (S/cm) and packing density (g/cc) are plotted on a y-axis and an x-axis, respectively, slope is 95 or greater. The slope represents the inherent conductive properties in that it allows for the indirect inference of resistivity of a conductive path itself when the expandable carbon nanotube powder forms the conductive path inside an electrode. When the slope is less than 95, it indicates that excessive cutting of carbon nanotubes occurred, leading to issues in forming conductive paths, or that the carbon nanotubes failed to form an appropriately expanded structure, resulting in failure to form an expandable carbon nanotube powder. That is, when the slope is less than 95, excessive cutting occurs or an expandable carbon nanotube powder having an expanded structure is not formed, and thus, an excellent conductive path may not be formed in the subsequent use as a conductive material, and a contact area between electrode active materials is reduced, resulting in poor resistance characteristics and lifespan characteristics.

According to an embodiment of the present invention, the expandable carbon nanotube powder has a slope of 95 or greater when electrical conductivity (S/cm) and packing density (g/cc) are plotted on a y-axis and an x-axis, respectively, and desirably, the slope may be 96 or greater, 97 or greater, 98 or greater, 99 or greater, or 100 or greater, 150 or less, 140 or less, 130 or less, 129 or less, 128 or less, 127 or less, 126 or less or 125 or less, and more desirably, 100 to 125. When the above range is satisfied, an expandable carbon nanotube powder having an expanded structure may be formed with minimized cutting, which may enable excellent resistance characteristics and lifespan characteristics in the subsequent use as a conductive material. In particular, the slope, as measured in the powder state of the expandable carbon nanotubes, is a parameter that is extremely difficult to measure in a typical pre-dispersion of a conductive material prepared under a wet process.

In the expandable carbon nanotube powder according to the present invention, the electrical conductivity (S/cm) and the packing density (g/cc) are measured while applying a pressure ranging from 50 MPa to 420 MPa to the expandable carbon nanotube powder. Desirably, the measurement may be performed at a pressure of 60 MPa to 420 MPa, and more desirably, at a pressure of 70 MPa to 420 MPa. The expandable carbon nanotube powder may form an expanded structure and have low bulk density, and thus, applying a low pressure may not result in sufficient electrical contact between powders, making it difficult to accurately measure the inherent conductive properties of the powder. That is, when low pressure is applied, it may be difficult to measure the slope intended by the present invention. In addition, an aspect is that the conductivity of the expandable carbon nanotube powder is measured under the high pressure range actually applied when preparing an electrode, and thus, conductivity in an electrode state may be more clearly determined. Therefore, when measuring electrical conductivity and packing density by applying pressure within the above range, the electrical conductivity and the packing density may be measured with sufficient electrical contact between powders, and thus a slope that may clearly represent the inherent conductive properties of the powder may be measured.

According to an embodiment of the present invention, the expandable carbon nanotube powder may have a bulk density of 0.022 g/cc or less, desirably 0.020 g/cc or less, 0.018 g/cc or less, 0.016 g/cc or less, 0.014 g/cc or less, 0.012 g/cc or less, 0.010 g/cc or less, or 0.009 g/cc or less, may have a bulk density of 0.001 g/cc or greater or 0.002 g/cc or greater, and more desirably may have a bulk density of 0.001 g/cc to 0.009 g/cc. When the above range is satisfied, an appropriately expanded structure may be formed while excessive cutting does not occur, thereby achieving excellent resistance characteristics and lifespan characteristics.

According to an embodiment of the present invention, when the expandable carbon nanotube powder has a packing density of 1.0 g/cc, the electrical conductivity may be 70 S/cm or greater, desirably, 70 S/cm or greater, 71 S/cm or greater, 72 S/cm or greater, 73 S/cm or greater, 74 S/cm or greater, or 75 S/cm or greater, and may be 125 S/cm or less, 123 S/cm or less, 120 S/cm or less, 117 S/cm or less, or 115 S/cm or less. More desirably, the electrical conductivity may be 75 S/cm to 115 S/cm. When the above range is satisfied, it is desirable in that the expandable carbon nanotube powder may have an appropriate expanded form, thus forming an excellent expandable structure.

According to an embodiment of the present invention, a ratio (TD/BD) of true density (TD) to bulk density (BD) of the expandable carbon nanotube powder may be 91 to 673, desirably 134 to 505, and more desirably 200 to 405. When the above range is satisfied, it is desirable in that the expandable carbon nanotube powder may be expanded appropriately while also achieving excellent dispersibility.

The bulk density (BD) may be measured by filling an expandable carbon nanotube powder into a container of a known specific volume, measuring the weight, and then converting the result to density.

The true density (TD) differs from bulk density in that it is the density based on the volume of a material itself within a porous material, excluding pores. A device for measuring the true density (TD) may be, for example, a dry automatic density meter (Accupic II 1340 series, Shimadzu Corporation). Using the device, the true density may be automatically measured by adding a small amount of expandable carbon nanotube powder. The true density may also be obtained using other measuring methods and/or devices in addition to the measuring methods and/or devices described above.

According to an embodiment of the present invention, the true density (TD) of the expandable carbon nanotube powder may be 1.850 g/cc to 2.500 g/cc, desirably 1.900 g/cc to 2.300 g/cc, and more desirably 1.950 g/cc to 2.150 g/cc. When the above range is satisfied, it may be desirable in that the density may be one that forms sufficient conductive paths within an electrode, and an expandable structure may be easily formed.

According to an embodiment of the present invention, the expandable carbon nanotube powder may have a BET specific surface area of 200 $m^2$/g to 1000 $m^2$/g, desirably 250 $m^2$/g to 950 $m^2$/g, and more desirably 300 $m^2$/g to 900 $m^2$/g. When the above range is satisfied, it is desirable in that an appropriately expanded structure may be formed while excellent dispersibility may be achieved.

According to an embodiment of the present invention, the expandable carbon nanotube powder may include carbon nanotube units. The graphite sheet of the carbon nanotubes has a cylindrical shape with a nano-sized diameter and has a $sp^2$ bonding structure. In this case, according to the rolling angle and structure of the graphite sheet, conductor or semiconductor properties may be shown. The carbon nanotubes may be classified into single-walled carbon nanotubes (SWCNT) units, double-walled carbon nanotubes (DWCNT) units, and multi-walled carbon nanotubes (MWCNT) units according to the number of bonds forming walls.

According to an embodiment of the present invention, the carbon nanotube units may be multi-walled carbon nanotube units. When the carbon nanotube units are single-walled carbon nanotubes or double-walled carbon nanotubes, battery manufacturing costs may be excessively high, which may degrade processability, and the carbon nanotube units may be present in an excessively aggregated state, which may make it difficult to form an expandable carbon nanotube powder having an expandable structure. Conversely, when the carbon nanotube units are multi-walled carbon nanotube units, manufacturing costs are relatively low, and mutual aggregation is not excessive, which enables the formation of an appropriate expandable structure.

According to an embodiment of the present invention, the multi-walled carbon nanotube units may have an aspect ratio of 30 to 10000, desirably 60 to 2000, and more desirably 100 to 1000. When the above range is satisfied, the dispersibility of the multi-walled carbon nanotube units may be excellent, and when subsequently using the multi-walled carbon nanotube units as a conductive material, a contact area between electrode active materials may be increased. The aspect ratio may be defined as a ratio of length and diameter of multi-walled carbon nanotube units.

According to an embodiment of the present invention, the multi-walled carbon nanotube units may have an average length of 0.1 $\mu$m to 100 um, desirably 0.1 $\mu$m to 50 $\mu$m, and more desirably 0.1 $\mu$m to 3 $\mu$m. When the above range is satisfied, appropriate dispersion of the multi-walled carbon nanotube units is achievable, and when subsequently using the multi-walled carbon nanotube units as a conductive material, the formation of a conductive network may be maximized. The average length corresponds to an average value of the lengths of the top 100 single-walled carbon nanotube units having a large length and the bottom 100 single-walled carbon nanotube units, observed through SEM or TEM.

According to an embodiment of the present invention, the multi-walled carbon nanotube units may have an average diameter of 5 nm to 200 nm, desirably 5 nm or greater, 6 nm or greater, 7 nm or greater, 8 nm or greater, 9 nm or greater, or 10 nm or greater, an average diameter of 200 nm or less, 180 nm or less, 160 nm or less, 140 nm or less, 120 nm or less, 100 nm or less, 80 nm or less, 60 nm or less, or 50 nm or less, and more desirably, an average diameter of 10 nm to 50 nm. When the above range is satisfied, dispersion is easy, and thus conductivity may be improved when subsequently using the multi-walled carbon nanotube units as a conductive material. The average diameter corresponds to an average value of the diameters of the top 100 single-walled carbon nanotube units having a large diameter and the bottom 100 single-walled carbon nanotube units, observed through SEM or TEM.

According to an embodiment of the present invention, the multi-walled carbon nanotube units may have a BET specific surface area of 50 $m^2$/g to 500 $m^2$/g, desirably 100 $m^2$/g to 400 $m^2$/g, and more desirably 150 $m^2$/g to 350 $m^2$/g.

When the above specific surface area range is satisfied, appropriate dispersion of the multi-walled carbon nanotube units is achievable, thereby maintaining manufacturing processability. The BET specific surface area may be measured using a nitrogen adsorption BET method.

According to an embodiment of the present invention, the multi-walled carbon nanotube units may have three or more graphene layers disposed in parallel with respect to an axis of the multi-walled carbon nanotube units. Desirably, the multi-walled carbon nanotube units may have 3 to 20 graphene layers, more desirably 3 to 10 graphene layers, and even more desirably 3 to 5 graphene layers. When the above range is satisfied, it may be desirable in that the multi-walled carbon nanotube units are appropriately dispersed, enabling the preparation of an expandable carbon nanotube powder having an expandable structure while improving the conductivity of the expandable carbon nanotube powder.

## Method for Preparing Expandable Carbon Nanotube Powder

Hereinafter, a method for preparing an expandable carbon nanotube powder according to the present invention will be described.

A method for preparing an expandable carbon nanotube powder according to the present invention includes disaggregating carbon nanotube aggregates in a disaggregation device in a solvent-free state via mutual collision, where the disaggregation is performed by the rotation of two or more rotors provided in the disaggregation device and by a high-pressure gas sprayed from a nozzle provided in the disaggregation device, the rotors have a rotation speed of at least 3000 rpm, and the nozzle sprays a high-pressure gas at a pressure of at least 3.5 bar.

Unlike wet electrodes, which are dispersed and/or mixed in a solvent, dry electrodes, when prepared, involve dispersing and/or mixing a conductive material (e.g., carbon nanotubes) in a solvent-free state. The process of dispersing and/or mixing in a solvent-free state prevents buffering and dispersing actions of a solvent, resulting in excessive shear force, which may lead to excessive cutting of the conductive material or failure to achieve the desired degree of disaggregation. In particular, when attempting to disaggregate carbon nanotubes in a solvent-free state, aggregation of carbon nanotubes due to van der Waals force is induced, making disaggregation even more difficult. In addition, because carbon nanotubes have a linear shape, when dispersion and/or mixing is performed in a solvent-free state, excessive shear force may easily cause pulverization of the carbon nanotubes.

Accordingly, the present invention provides a method for preparing an expandable carbon nanotube powder having excellent dispersibility, by disaggregating carbon nanotube aggregates in a solvent-free state via mutual collision while controlling the disaggregation conditions to satisfy specific conditions, thereby forming an expandable structure without excessive cutting.

Specifically, devices such as jaw crushers and hammer crushers, which may apply pulverization force with strong shear force in a solvent-free state, perform pulverization that causes damage to carbon nanotubes, and thus hardly generate carbon nanotubes having an expandable structure. However, in the present invention, carbon nanotubes having an expandable structure may be prepared via mutual collision in a solvent-free state to minimize cutting while performing disaggregation with an appropriate force, thereby achieving excellent resistance characteristics and lifespan characteristics when preparing a powder for electrodes and a dry electrode including the same thereafter.

The expandable carbon nanotube powder is described above, and thus detailed descriptions of the expandable carbon nanotube powder are not provided again.

According to an embodiment of the present invention, the carbon nanotube aggregates may be aggregates in which carbon nanotubes are aggregated at a high density, for example, bundle-type carbon nanotubes or entangled-type carbon nanotubes.

The method for preparing expandable carbon nanotubes according to the present invention includes disaggregating carbon nanotube aggregates via mutual collision in a disaggregation device in a solvent-free state, where the disaggregation is performed by the rotation of two or more rotors provided in the disaggregation device and by a high-pressure gas sprayed from a nozzle provided in the disaggregation device. Desirably, the disaggregation may be performed by swirling airflow generated by the rotation of two or more rotors provided in the disaggregation device and a high-pressure gas sprayed from a nozzle provided in the disaggregation device, and more desirably, the disaggregation may be performed by swirling airflow and impact force generated by the rotation of two or more rotors provided in the disaggregation device and a high-pressure gas sprayed from a nozzle provided in the disaggregation device.

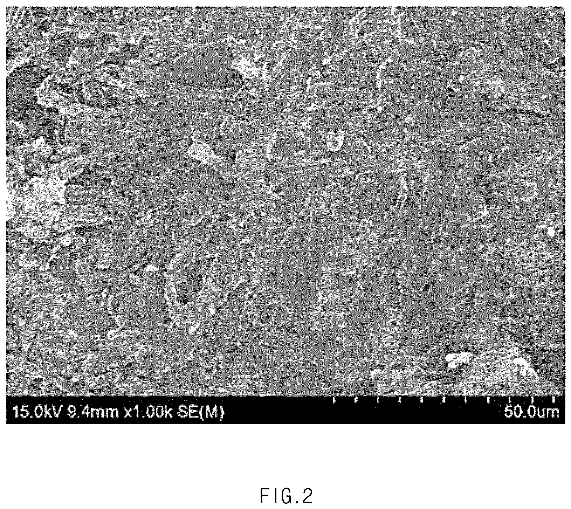

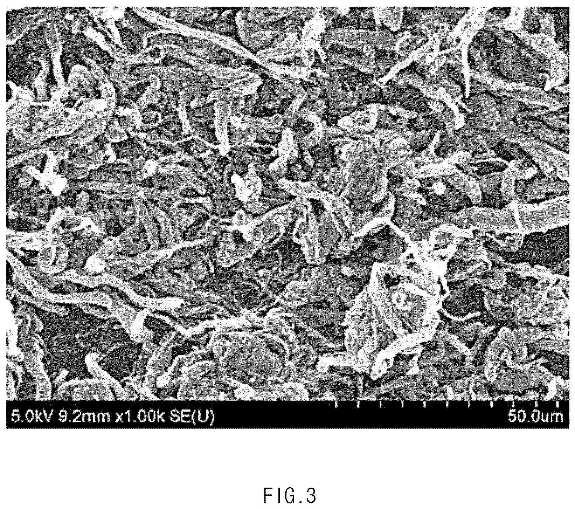

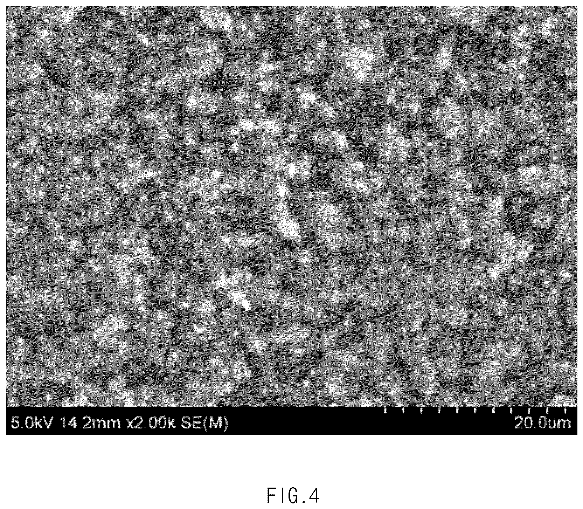

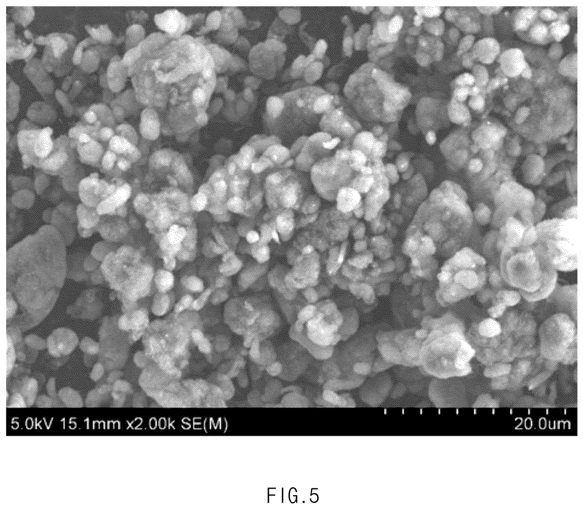

Unlike pulverization methods that apply excessive and concentrated impact, such as ball milling, the preparation method involves disaggregating carbon nanotube aggregates via mutual collision. Accordingly, excessive cutting and aggregation of carbon nanotube aggregates are prevented, allowing the carbon nanotube aggregates of FIGS. 2 and 4 to be transformed into expandable carbon nanotube powders having an expandable structure, as shown in FIGS. 3 and 5. The forming of an expandable carbon nanotube powder having an expandable structure as described above, when preparing a powder for an electrode and/or a dry electrode thereafter, may allow the carbon nanotubes to appropriately connect electrode active material particles and to form an excellent conductive network, and to exhibit excellent dispersibility even in a solvent-free state, thereby achieving excellent resistance properties and lifespan characteristics.

When the above conditions are satisfied, it may be desirable in that the degree of disaggregation may be increased by strengthening the collision between carbon nanotube aggregates due to swirling airflow and high-pressure gas, and by causing the carbon nanotube aggregates to collide with the rotor due to impact force by the rotor and/or pressure sprayed from the nozzle.

Meanwhile, disaggregating carbon nanotube aggregates via mutual collision using only high-pressure gas sprayed from a nozzle provided in a disaggregation device without rotor rotation results in low disaggregation efficiency due to no swirling airflow or impact force by rotor rotation, and provides no energy effectively disaggregate aggregation by van der Waals force between or within carbon nanotube aggregates aggregated at a high density, thereby failing to form an expandable carbon nanotube powder.

In the method for preparing an expandable carbon nanotube powder according to the present invention, the rotors have a rotation speed of 3000 rpm or greater. Desirably, the rotors may have a rotation speed of 3100 rpm or greater, 3200 rpm or greater, 3300 rpm or greater, 3400 rpm or greater, 3500 rpm or greater, 3600 rpm or greater, 3700 rpm or greater, 3800 rpm or greater, 3900 rpm or greater, 4000 rpm or greater, 4100 rpm or greater, 4200 rpm or greater, 4300 rpm or greater, 4400 rpm or greater, 4500 rpm or greater, 4600 rpm or greater, 4700 rpm or greater, 4800 rpm or greater, 4900 rpm or greater, or 5000 rpm or greater, and have a rotation speed of 7000 rpm or less, 6900 rpm or less, 6800 rpm or less, 6700 rpm or less, 6600 rpm or less, 6500 rpm or less, 6400 rpm or less, 6300 rpm or less, 6200 rpm or less. It may be 6100 rpm or less, 5900 rpm or less, 5800 rpm or less, 5700 rpm or less, 5600 rpm or less, 5500 rpm or less, or 5400 rpm or less, and more desirably have a rotation speed of 5000 rpm to 5400 rpm. When the rotors have a rotation speed of less than 3000 rpm, the van der Waals force of carbon nanotube aggregates may not be overcome, resulting in aggregation of the carbon nanotube aggregates, which prevents the preparation of an expandable carbon nanotube powder having an expandable structure. Therefore, when the above range is satisfied, excessive cutting of the carbon nanotube aggregates may not occur, and a sufficiently disaggregated expandable carbon nanotube powder having an expandable structure may be prepared, thereby achieving excellent resistance characteristics and lifespan characteristics.

In the method for preparing an expandable carbon nanotube powder according to the present invention, the nozzle sprays high-pressure gas at a pressure of 3.5 bar or greater. The nozzle may desirably spray high-pressure gas at a pressure of 3.6 bar or greater, 3.7 bar or greater, 3.8 bar or greater, 3.9 bar or greater, 4.0 bar or greater, 4.1 bar or greater, 4.2 bar or greater, 4.3 bar or greater, 4.4 bar or greater, 4.5 bar or greater, 4.6 bar or greater, 4.7 bar or greater, 4.8 bar or greater, 4.9 bar or greater, or 5.0 bar or greater, and may spray high-pressure gas at a pressure of 7.5 bar or less. The nozzle may more desirably spray high-pressure gas at a pressure of 5.0 bar to 7.5 bar. The nozzle is a nozzle that sprays gas and/or fluid capable of generating pressure, such as water vapor, air, steam, nitrogen, and/or argon gas, and may disaggregate carbon nanotube aggregates via collisions between carbon nanotube aggregates or between carbon nanotube aggregates and the rotor. When the nozzle sprays high-pressure gas at a pressure of less than 3.5 bar, the carbon nanotube aggregates are not subjected to enough pressure to overcome the van der Waals force, leading to failure to form an expandable carbon nanotubes having an expandable structure. Therefore, when the above range is satisfied, excessive cutting of the carbon nanotube aggregates may not occur, and a sufficiently disaggregated expandable carbon nanotube powder having an expandable structure may be prepared, thereby achieving excellent resistance characteristics and lifespan characteristics.

According to an embodiment of the present invention, the disaggregation device is not particularly limited as long as it is capable of applying a moderate amount of force, but may be, for example, a Galaxy jet mill (JEM Corporation).

Hereinafter, the carbon nanotube aggregates used in the preparation method according to the present invention will be described in more detail.

Among the carbon nanotube aggregates, bundle-type carbon nanotubes indicate a form in which carbon nanotubes are aggregated into a bundle due to interactions between carbon nanotube units, rather than a form in which carbon nanotubes are present as a single-strand unit, and may desirably indicate a form in which carbon nanotube units are attached or entangled due to their mutual interaction.

According to an embodiment of the present invention, the carbon nanotube aggregates may have a bulk density of 0.011 $g/cm^3$ to 0.900 $g/cm^3$, the carbon nanotube aggregates may desirably have a bulk density of 0.020 $g/cm^3$ to 0.500 $g/cm^3$, and the carbon nanotube aggregates may more desirably have a bulk density of 0.030 $g/cm^3$ to 0.150 $g/cm^3$. When the above range is satisfied, the carbon nanotube aggregates may be suitable for achieving the degree of disaggregation according to the preparation method of the present invention.

The bulk density may be measured by filling an expandable carbon nanotube powder into a container of a known specific volume, measuring the weight, and then converting the result to density.

According to an embodiment of the present invention, the carbon nanotube aggregate may have a volume cumulative average particle diameter of 100 $\mu$m to 600 $\mu$m, desirably 200 $\mu$m to 580 $\mu$m, and more desirably 300 $\mu$m to 560 $\mu$m. When the above range is satisfied, an appropriate number of carbon nanotube units are aggregated, and thus the carbon nanotube aggregates may be suitable for achieving the degree of disaggregation according to the preparation method of the present invention. The volume cumulative average particle diameter is not limited as long as it is measured by a typical method, such as by using a scanning electron microscope or a laser diffraction method, but is desirably measured through a volume cumulative particle diameter distribution using a laser diffraction method.

The carbon nanotube aggregates may include carbon nanotube units. The graphite sheet of the carbon nanotubes has a cylindrical shape with a nano-sized diameter and has a $sp^2$ bonding structure. In this case, according to the rolling angle and structure of the graphite sheet, conductor or semiconductor properties may be shown. The carbon nanotubes may be classified into single-walled carbon nanotubes (SWCNT) units, double-walled carbon nanotubes (DWCNT) units, and multi-walled carbon nanotubes (MWCNT) units according to the number of bonds forming walls.

According to an embodiment of the present invention, the carbon nanotube aggregates may include multi-walled carbon nanotube units. When the carbon nanotube units are single-walled carbon nanotube units or double-walled carbon nanotube units, battery manufacturing costs may be excessively high, which may degrade processability, and the carbon nanotube units may be present in an excessively aggregated state, which may make disaggregation difficult. Conversely, when the carbon nanotube units are multi-walled carbon nanotube units, manufacturing costs are relatively low, and mutual aggregation is not excessive, which allows for appropriate disaggregation and results in excellent processability.

In particular, multi-walled carbon nanotube units are highly defective in structure due to the mechanism of node growth (having nodes due to defects occurring during a growth process instead of being smoothly linear). Accordingly, during a disaggregation process, the multi-walled carbon nanotube units are more easily cut, and the multi-walled carbon nanotube units cut short by $\pi$-$\pi$ stacking due to a carbon surface bonding structure (sp2) are likely to aggregate with each other. However, the disaggregation performed through the preparation method according to the present invention may prevent the multi-walled carbon nanotube units from aggregating, and also prevent electrical conductivity from being degraded due to the shortening of the carbon nanotube units by excessive cutting, thereby maximizing the effects of the present invention.

When the carbon nanotube aggregates include multi-walled carbon nanotube units, the same applies as described above with respect to the multi-walled carbon nanotube units.

## Dry Electrode

A dry electrode according to the present invention includes the expandable carbon nanotube powder according to the present invention. Desirably, the dry electrode according to the present invention may include a current collector, an electrode material mixture film formed on the current collector, where the electrode material mixture film may include an electrode active material, a conductive material, and a binder having a three-dimensional fiber network structure, and the conductive material may include the expandable carbon nanotube powder according to the present invention.

The expandable carbon nanotube powder according to the present invention may exhibit excellent effects when used as a conductive material in the electrode material mixture film included in the dry electrode. For example, an expandable carbon nanotube powder having an expandable structure, that is properly dispersed and has minimal cutting, may maintain excellent dispersibility while minimizing cutting during the subsequent dry electrode preparation process, thereby forming an excellent conductive network between and/or within electrode active materials in an electrode material mixture film, and sufficiently preventing conductive material aggregation that reduces conductive effects, leading to excellent resistance characteristics and lifespan characteristics.

In particular, the expandable carbon nanotube powder of the present invention satisfies the above-described relationship between electrical conductivity and bulk density in a solvent-free state, and thus environmental friendliness, processability, resistance, and lifespan characteristics may be further maximized when the expandable carbon nanotube powder is included in the dry electrode.

In addition, the dry electrode according to the present invention may be prepared by stacking the electrode material mixture film on one side or both sides of a current collector and laminating the resulting product.

The lamination may involve attaching the electrode material mixture film onto the current collector by rolling. The lamination may be performed by a roll press method using a lamination roller, and, in this case, the lamination roller may be maintained at a temperature of 20°C to 200°C.

The expandable carbon nanotube powder according to the present invention is described above and will not be further provided, and the current collector and the electrode material mixture film will be described in detail.

(Current Collector)

In a case in which the dry electrode is a positive electrode, the current collector is not particularly limited so long as it has conductivity without causing chemical changes in batteries. For example, stainless steel, aluminum, nickel, titanium, fired carbon, or aluminum or stainless steel that is surface-treated with one of carbon, nickel, titanium, silver, or the like may be used as the current collector.

The current collector may have a thickness of 8 $\mu$m to 500 $\mu$m, but the thickness of the current collector is not limited thereto. In addition, fine irregularities may be formed on a surface of the current collector to improve the adhesion of the electrode material mixture film.

In a case in which the dry electrode is a negative electrode, the current collector is not particularly limited so long as it has high conductivity without causing changes in batteries, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used.

The current collector may typically have a thickness of 3 $\mu$m to 500 $\mu$m, and as in the case where the dry electrode is used as a positive electrode, fine irregularities may be formed on a surface of the current collector to improve the adhesion of the electrode material mixture film.

The current collector may be entirely or partially coated with a conductive primer to lower surface resistance and improve adhesion. In this case, the conductive primer may include a conductive material and a binder, and the conductive material is not limited as long as the material is conductive, but may be, for example, a carbon-based material. The binder may include a fluorine-based binder (including PVDF and PVDF copolymer), an acryl-based binder, and an aqueous binder, which are soluble in solvents.

(Electrode Material Mixture Film)

The electrode material mixture film according to the present invention includes an electrode active material, a conductive material, and a binder having a three-dimensional fiber network structure, where the conductive material includes the expandable carbon nanotube powder according to the present invention.

1) Electrode Active Material

The electrode material mixture film includes an electrode active material

There is no particular limitation on the electrode active material as long as it is a commonly used electrode active material, and, for example, the electrode active material may be a positive electrode active material or a negative electrode active material.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may be lithium-manganese-based oxide (e.g., $LiMnO_2$, $LiMn_2O_4$, and the like), lithium-cobalt-based oxide (e.g., $LiCoO_2$ and the like), lithium-nickel-based oxide (e.g., $LiNiO_2$ and the like), lithium-nickel-manganese-based oxide (e.g., $LiNi_{1-y}Mn_yO_2$ (where $0<Y<1$), $LiMn_{2-z}Ni_zO_4$ (where $0<Z<2$), and the like), lithium-nickel-cobalt-based oxide (e.g., $LiNi_{1-Y1}Co_{Y1}O_2$ (where $0<Y1<1$ and the like), lithium-manganese-cobalt-based oxide (e.g., $LiCo_{1-Y2}Mn_{Y2}O_2$ (where $0<Y2<1$), $LiMn_{2-z1}Co_{z1}O_4$ (where $0<Z1<2$), and the like), lithium-nickel-manganese-cobalt-based oxide (e.g., $Li(Ni_pCo_qMn_r)O_2$ (where $0<p<1$, $0<q<1$, $0<r<1$, and $p+q+r=1$) or $Li(Ni_{p1}Co_{q1}Mn_{r1})O_4$ (where $0<p1<2$, $0<q1<2$, $0<r1<2$, and $p1+q1+r1=2$), and the like), or lithium-nickel-cobalt-transition metal (M) oxide (e.g., $Li(Ni_{p2}Co_{q2}Mn_{r2}M_{s2})O_2$ (where M is selected from the group consisting of Al, Fe, V, Cr, Ti, Ta, Mg, and Mo, and p2, q2, r2, and s2 are each an atomic fraction of independent elements, wherein $0<p2<1$, $0<q2<1$, $0<r2<1$, $0<s2<1$, and $p2+q2+r2+s2=1$ are satisfied), lithium iron phosphate (e.g., $Li_{1+a}Fe_{1-x}M_x(PO_{4-b})X_b$ (where M is at least one selected from Al, Mg, and Ti, X is at least one selected from F, S and N, and $-0.5\leq a\leq 0.5$, $0\leq x\leq 0.5$, and $0\leq b\leq 0.1$ are satisfied), and the like, and any one thereof or a compound of two or more thereof may be included.

Among these materials, in terms of the improvement of capacity characteristics and stability of the battery, the lithium metal oxide may be $LiCoO_2$, $LiMnO_2$, $LiNiO_2$, lithium nickel manganese cobalt oxide (e.g., $Li(Ni_{1/3}M_{D1/3}Co_{1/3})O_2$, $Li(Ni_{0.6}Mn_{0.2}Co_{0.2})O_2$, $Li(Ni_{0.3}Mn_{0.3}Co_{0.2})O_2$, $Li(Ni_{0.7}Mn_{0.15}Co_{0.15})O_2$, and $Li(Ni_{0.8}Mn_{0.1}Co_{0.1})O_2$), lithium nickel cobalt aluminum oxide (e.g., $Li(Ni_{0.8}Co_{0.15}Al_{0.05})O_2$, etc.), lithium nickel cobalt manganese aluminum oxide (e.g., $Li(Ni_{0.86}Co_{0.05}Mn_{0.07}Al_{0.02})O_2$), or lithium iron phosphate (e.g., $LiFePO_4$), and any one thereof or a mixture of two or more thereof may be used. More specifically, in terms of being able to prepare an electrode material mixture film in a form of a uniform and stable film, the electrode active material may include lithium nickel cobalt manganese aluminum oxide.

More desirably, the electrode active material may include a phosphorus oxide represented by Formula 1 below.

$$[\text{Formula 1}] \qquad Li_{1+x}[Fe_{1-a-b}Mn_aM^1_b]PO_4$$

In Formula 1 above, $M^1$ includes at least one element selected from the group consisting of Al, Mg, Ni, Co, Ti, Ga, Cu, V, Mo, Nb, W, Zr, Ce, In, Zn, and Y, and x, a, and b satisfy $-0.5\leq x\leq 0.5$, $0\leq a\leq 0.8$, and $0\leq b\leq 0.1$. In a case in which the above conditions are satisfied, it may be desirable in terms of being able to achieve excellent economic efficiency and stability.

The negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of Cu, Ni, sodium (Na), potassium (K), rubidium (Rb), cesium (Cs), francium (Fr), beryllium (Be), Mg, calcium (Ca), strontium (Sr), silicon (Si), antimony (Sb), lead (Pb), In, Zn, barium (Ba), radium (Ra), germanium (Ge), Al, and tin (Sn) or an alloy of lithium and the metal may be used.

One selected from the group consisting of $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, $Bi_2O_5$, $Li_xFe_2O_3$ $(0 \leq x \leq 1)$, $Li_xWO_2$ $(0 \leq x \leq 1)$, and $Sn_xMe_{1-x}Me'_yO_z$ (Me:Mn, Fe, Pb, or Ge; Me':Al, boron (B), P, Si, Groups I, II, and III elements of the periodic table, or halogen; $0 < x \leq 1$; $1 \leq y \leq 3$; $1 \leq z \leq 8$) may be used as the metal composite oxide.

The material, which may be doped and undoped with lithium, may include Si, $SiO_x$ $(0 < x \leq 2)$, a Si-Y alloy (where Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, scandium (Sc), Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, Ga, Sn, In, Ge, P, arsenic (As), Sb, bismuth (Bi), S, selenium (Se), tellurium (Te), polonium (Po), and a combination thereof.

The transition metal oxide may include lithium-containing titanium composite oxide (LTO), vanadium oxide, and lithium vanadium oxide.

According to an embodiment of the present invention, the electrode active material may be included in an amount of 80 to 99 parts by weight, and desirably 90 to 99 parts by weight, with respect to a total weight of the electrode material mixture film. When the above range is satisfied, it is desirable in terms of increased electrode capacity and energy density.

2) Conductive Material

The electrode material mixture film includes a conductive material, and the conductive material includes the expandable carbon nanotube powder according to the present invention.

According to an embodiment of the present invention, the conductive material may be included in an amount of 0.1 to 10 parts by weight, and desirably 0.1 to 5.0 parts by weight, with respect to a total weight of the electrode material mixture film. When the above range is satisfied, it is desirable in that an excellent conductive path may be formed while excellent capacity density may be achieved.

3) Binder

The electrode material mixture film includes a binder having a three-dimensional fiber network structure.

The binder serves to form a three-dimensional fiber network structure that allows the electrode material mixture film to be self-supporting. The binder is not specifically limited, as long as it is a fibrillizable material, that is, one which through fibrillization may form a three-dimensional fiber network structure within the electrode material mixture film and provide pores capable of accommodating an electrode active material and optionally a conductive material.

The fibrillization of the binder indicates a process of finely dividing a polymer applied as a binder, and may be performed, for example, by applying mechanical shear force or the like, and consequently, the surface is loosened and fibrillized, forming a plurality of fine fibers, and thereby including a three-dimensional fiber network structure.

The fibrillizable binder is not particularly specified as long as it may be fibrillized, and the fibrillization refers to a treatment of finely dividing a polymer. For example, the fibrillization may be performed using a mechanical shear force or the like, and surfaces of the polymer fibers thus fibrillized are loose to generate a large number of fine fibers (fibrils). The fibrillizable binder may desirably include at least one selected from the group consisting of polytetrafluoroethylene (PTFE) and polyolefin, may more desirably polytetrafluoroethylene (PTFE), and may even more desirably be polytetrafluoro- oethylene (PTFE). When the conditions described above are satisfied, excellent conductive dispersibility may be achieved with appropriately reduced resistance.

Meanwhile, the polytetrafluoroethylene (PTFE) may be included in an amount of 60 wt% or greater with respect to a total weight of the binder. In this case, the binder may further include one or more of polyethylene oxide (PEO), polyvinylidene fluoride (PV d F), polyvinylidene fluoride-cohexafluoropropylene (PVdF-HFP), and a polyolefin-based binder.

According to an embodiment of the present invention, the fibrillizable binder may be included in an amount of 0.1 to 10 parts by weight, and desirably 0.1 to 5.0 parts by weight, with respect to a total weight of the electrode material mixture film. When the above range is satisfied, it is desirable in that a degree of fibrillization appropriate for preparing a self-supporting sheet may be achieved with excellent resistance characteristics.

Meanwhile, the dry electrode according to the present invention may be prepared by including step S1 of mixing an electrode active material, a conductive material, and a fibrillizable binder to obtain a material mixture composition, step S2 of kneading the material mixture composition while applying shear force to form a mixed aggregate, step S3 of pulverizing the mixed aggregate to prepare a powder for an electrode, and step S4 of sheet-forming the powder for an electrode into an electrode material mixture film by roll pressing.

(Step S1)

This is a step of mixing an electrode active material, a conductive material, and a binder to form a material mixture composition. The electrode active material, the conductive material, and the binder are described above and thus specific descriptions thereof will not be provided again. In this case, the mixing is performed such that the electrode active material, the conductive material, and the binder are uniformly distributed, and the components are mixed in powder form, and thus the mixing is not limited and may be performed through various methods as long as simple mixing is allowed. However, in the present invention, a dry electrode with no use of a solvent is prepared, and thus the mixing may be performed through dry mixing, and the materials described above may be added to a device such as a mixer or a blender, and mixed.

In this case, the mixing may be performed in a mixer at 100 rpm to 5000 rpm for 1 to 60 minutes. Desirably, the mixing may be performed in a mixer at 500 rpm to 4000 rpm for 3 to 45 minutes, and more desirably at 100 rpm to 3000 rpm for 5 to 30 minutes. When the mixing is performed within the above range, the materials may be uniformly mixed, thereby improving battery performance.

The control conditions of the mixing process may determine how uniformly and well the binder is fibrillized in the subsequent kneading process of step S2, and when the mixing is not uniformly performed, even in a case where fibrillization occurs uniformly, non-uniform portions may be present on the entire side of a film, and thus, it may be desirable to perform the mixing process under the conditions described above.

(Step S2)

Next, a fibrillization process of binder using a binder capable of forming a three-dimensional fiber network structure may be performed on the material mixture composition obtained from the mixing, thereby preparing a mixed aggregate. Desirably, kneading the material mixture composition while applying shear force to form a mixed aggregate may be performed.

The fibrillization process may be performed, for example, through mechanical milling or kneading, and is not particularly limited as long as the process is generally performed, but may desirably be performed through high temperature-low shear kneading, and may be performed, for example, through a kneading machine such as a kneader. Through this kneading, the binder capable of forming a three-dimensional fiber network structure is fibrillized, and accordingly, the electrode active material and conductive material powders are combined or connected to form a mixed aggregate with a solid content of 100%.

The kneading may be performed at a rate of 10 rpm to 100 rpm, and specifically may be performed at a rate of 20 rpm to 70 rpm. In addition, the kneading may be performed for 1 to 120 minutes, and specifically for 2 to 60 minutes. When the above range is satisfied, appropriate fibrillization may be performed, allowing the binder to be uniformly fibrillized overall and to form a structurally stable three-dimensional fiber network structure.

In addition, the kneading may be performed at high temperature and normal pressure or higher, and specifically, may be performed at pressure higher than normal pressure.

More specifically, the kneading may be performed at 50°C to 230°C, desirably at 90°C to 200°C. When the kneading is performed at a high temperature in the above range, fibrillization of the binder and lump formation through kneading may be well performed, and breakage of the binder subjected to fibrillization may be appropriately prevented.

In addition, the kneading may be performed at or above atmospheric pressure, specifically at a pressure of 1 atm to 3 atm. When the kneading is performed within the above range, breakage of the binder subjected to fibrillization may be appropriately prevented, and an aggregate may be prevented from having an excessively high density.

That is, according to the present invention, when a high temperature-low shear mixing process is performed at high temperature and normal pressure or higher instead of high shear mixing, the effect intended by the present invention may be achieved.

(Step S3)

Next, pulverizing the mixed aggregate prepared through the kneading to obtain a powder for an electrode may be performed. Desirably, pulverizing the mixed aggregate to prepare a powder for an electrode may be performed.

The mixed aggregate prepared through the kneading may be directly pressed and molded into a sheet (sheeting, for example, calendering process), but in this case, the mixed aggregate may be pressed at strong pressure and high temperature to form a thin film, and accordingly, the film may have an excessively high density or a uniform film is not obtainable. Therefore, the mixed aggregate prepared as above is pulverized to prepare a powder for an electrode.

An instrument used for the pulverization is not particularly limited, but the pulverization may desirably be performed using an instrument such as a blender or grinder.

The pulverizing may be performed at a rate of 1000 rpm to 15000 rpm for 1 to 30 minutes, desirably at a rate of 3000 rpm to 10000 rpm for 5 to 20 minutes. When the pulverizing is performed within the above range, sufficient pulverization may be achieved to prepare powder of an appropriate size for forming a film, and a large amount of fine powder may not be generated in the mixed aggregate.

An average particle diameter of the powder for an electrode may be in a range of 10 $\mu$m to 3,000 $\mu$m, specifically 50 $\mu$m to 1,500 $\mu$m, and more specifically 100 $\mu$m to 700 $\mu$m. When the above range is satisfied, an electrode material mixture film having uniform thickness and density may be formed, and excellent electrode material mixture film physical properties may be obtained,.

Meanwhile, the powder for an electrode may, although not essential, further include fillers to suppress expansion of the electrode. The filler is not particularly limited as long as it is a fibrous material without causing chemical changes in batteries, and may be at least one selected from, for example, olefin-based polymers such as polyethylene and polypropylene; fibrous materials such as glass fiber and carbon fiber.

(Step S4)

Next, the powder for an electrode is sheet-formed into an electrode material mixture film by roll pressing. Desirably, step S4 may be a process of preparing an electrode material mixture film in the form of a self-standing sheet by thermocompressing the powder for an electrode using pressing rolls in a roll-to-roll process including two or more pairs of pressing rolls.

The roll-to-roll process may include a roll press unit where roll pressing is performed, and the roll press unit may be one in which a pair of pressing rolls are disposed to face each other, or one in which a plurality of pressing rolls are continuously disposed, and the pressing rolls may be continuously disposed in plurality in the roll press unit. When the plurality of pressing rolls are continuously disposed, the temperatures and tip speed ratio (the rotation speed ratio of a pair of rolls) of each roll may be the same or different.

According to an embodiment of the present invention, the temperature of the pressing roll may be 50°C to 200°C, desirably the temperature of the calendar roll may be 50°C to 180°C, and more desirably the temperature of the calendar roll may be 60°C to 150°C. When the above ranges are satisfied, an electrode material mixture film with excellent processability and uniformity may be obtained.

The rotation speed ratio of the pressing rolls provided in the roll-to-roll process of step S4 may be appropriately adjusted independently within a range of 1:1 to 1:10. In addition, the prepared electrode material mixture film may be put back into the roll press unit and thermocompressed 1 to 10 times to be adjusted to have an appropriate thickness.

According to an embodiment of the present invention, step S4 may include step S4a of pre-sheeting the powder for an electrode to obtain a powder-sheeting film, and step S4b of sheeting the powder-sheeting film two or more times to prepare an electrode material mixture film. That is, after the powder is converted into a sheet in step S4a, step S4b may be performed to roll the sheet to enhance strength and satisfy the porosity and loading amount required for the electrode.

Meanwhile, according to an embodiment of the present invention, stacking the electrode material mixture film on one or both sides of a current collector and then inserting the resulting product into a lamination unit for lamination may be further included. Through this, the electrode material mixture film is roll pressed onto the current collector, thereby preparing a dry electrode in which the electrode material mixture film is disposed on the current collector.

The lamination may involve attaching the electrode material mixture film onto the current collector by roll pressing. The lamination may be performed by a roll press method using a lamination unit including a lamination roll.

According to an embodiment of the present invention, the lamination roll may be maintained at a temperature of 20°C to 200°C.

The lamination may desirably be performed after at least one or at least two heat pressing operations, and then one or more additional heat pressing operations may be performed to achieve the desired porosity. When the lamination is performed during calendering as described above, the electrode appearance and calendering processability may be improved compared to lowering the porosity in the material mixture film state prior to lamination. Porosity control through additional heat pressing may be achieved by controlling the compression ratio with roll gap adjustment, which may be derived using Relation 2 below.

Compression ratio (%) = [(electrode thickness) - (roll gap)]/[(electrode thickness) - (current collector thickness)]  [Relation 2]

## Lithium Secondary Battery

Hereinafter, a lithium secondary battery according to the present invention will be described.

The lithium secondary battery according to the present invention may include the dry electrode according to the present invention. For example, the lithium secondary battery may include a secondary battery including a liquid electrolyte and an all-solid-state battery including a solid electrolyte.

Specifically, the lithium secondary battery according to the present invention includes a positive electrode, a negative electrode, a separator, and an electrolyte, where the positive electrode and/or the negative electrode may be a dry electrode, and specifically, the lithium secondary battery according to the present invention may be a lithium secondary battery including the dry electrode according to the present invention, a negative electrode, a separator, and an electrolyte. In a case in which only one of the positive electrode or the negative electrode is the dry electrode according to the present invention, the other electrode may be an electrode that is prepared through a typical wet preparation method.

In a case where the lithium secondary battery according to an embodiment of the present invention is a secondary battery including a liquid electrolyte, a separator may be included between a plurality of electrodes. The separator separates the negative electrode and the positive electrode and provides a movement path of lithium ions, where any separator may be used as the separator without particular limitation as long as it is typically used in a lithium secondary battery, and particularly, a separator having high moisture-retention ability for an electrolyte as well as low resistance to the transfer of electrolyte ions is desirable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

In addition, when the lithium secondary battery is an all-solid-state battery, the solid electrolyte membrane may be prepared to perform the function of the separator.

The separator separates the negative electrode and the positive electrode and provides a movement path of lithium ions, where any separator may be used as the separator without particular limitation as long as it is typically used in a lithium secondary battery, and particularly, a separator having high moisture-retention ability for an electrolyte as well as low resistance to the transfer of electrolyte ions is desirable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is desirable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more desirable.

The lithium salt may be used without particular limitation as long as it is a compound capable of providing lithium ions used in the lithium secondary battery. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$ $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used. The lithium salt may be used in a concentration range of 0.1 M to 4.0 M, desirably 0.5 M to 3.0 M, and more desirably 1.0 M to 2.0 M. When the concentration of the lithium salt is included within the above range, since the electrolyte may have appropriate conductivity and viscosity, excellent performance of the electrolyte may be obtained and lithium ions may effectively move.

To improve life characteristics of batteries, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 10.0 wt% with respect to a total weight of the electrolyte.

In addition, the lithium secondary battery according to the present invention stably exhibits excellent discharging capacity, output properties, and capacity retention, and thus, are useful for portable devices such as a mobile phone, a notebook computer, and a digital camera, and in the field of electric cars such as a hybrid electric vehicle (HEV).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be performed by a person skilled in the art to which the present invention pertains. The present invention may, however, be embodied in many different forms, and is not limited to examples set forth herein.

## Examples and Comparative Examples

### Example 1: Preparation for expandable carbon nanotube powder

Bundle-type carbon nanotubes (BET specific surface area: 256 $m^2/g$, bulk density: 0.110 g/cc) including multi-walled carbon nanotube units (average diameter: 10 nm) were added into a disaggregation device (Galaxy Jet Mill, JEM Co.) and disaggregated in a solvent-free state to prepare an expandable carbon nanotube powder.

In this case, a jet nozzle included in the disaggregation device had a spray pressure of 5 bar.

### Comparative Example 1: Preparation for expandable carbon nanotube powder

An expandable carbon nanotube powder was prepared in the same manner as in Example 1, except that the multi-walled carbon nanotube units had an average diameter of 6 nm, and the bundle-type carbon nanotubes had a BET specific surface area of 380 $m^2/g$ and a bulk density of 0.080 g/cc.

### Comparative Example 2: Preparation for expandable carbon nanotube powder

An expandable carbon nanotube powder was prepared in the same manner as in Example 1, except that the multi-walled carbon nanotube units had an average diameter of 8 nm, and the bundle-type carbon nanotubes had a BET specific surface area of 300 $m^2/g$ and a bulk density of 0.080 g/cc.

### Comparative Example 3: Preparation for expandable carbon nanotube powder

An expandable carbon nanotube powder was prepared in the same manner as in Example 1, except that the multi-walled carbon nanotube units had an average diameter of 8 nm, and the bundle-type carbon nanotubes had a BET specific surface area of 260 $m^2/g$ and a bulk density of 0.12 g/cc.

**Experimental Example 1: Measurement of electrical conductivity, packing density, slope, and bulk density of expandable carbon nanotube powder**

1) **Measurement of electrical conductivity (S/cm) and packing density (g/cc) of expandable carbon nanotube powder:** 3.0 g of the expandable carbon nanotube powder each prepared in Example 1 and Comparative Examples 1 to 3 was added into a cylindrical punch-die jig (diameter: 6.38 mm, width: 0.38 cm$^2$), and then force was increased from 200 kgf to 1600 kgf in a force-measuring press device to measure electrical conductivity at every 200 kgf unit, and volume decreased as the force increased was also measured to determine packing density.
The measurement results are shown in Table 1.

2) **Measurement of slope and bulk density of expandable carbon nanotube powder when electrical conductivity (S/cm) and packing density (g/cc) were each plotted on a y-axis and an x-axis:**

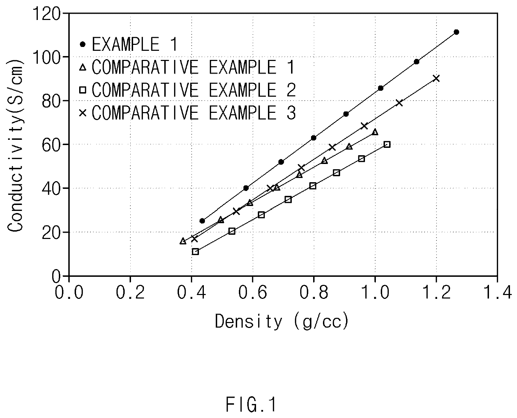

For the expandable carbon nanotube powders prepared in Example 1 and Comparative Examples 1 to 3, electrical conductivity (S/cm) and packing density (g/cc) at the specific force (kgf) measured in 1) were each plotted on the y-axis and the x-axis to obtain slope. In this case, the slopes of Example 1 and Comparative Examples 1-3 are shown in FIG. 1.

In addition, bulk density may be measured by filling an expandable carbon nanotube powder into a 25 mL container, measuring the weight, and then converting the result to density.

The measurement results are shown in Table 2.

[Table 1]

|  | Force (kgf) | 200 | 400 | 600 | 800 | 1000 | 1200 | 1400 | 1600 |
|---|---|---|---|---|---|---|---|---|---|
|  | Pressure (MPa) | 51.6 | 103 | 155 | 206 | 258 | 309 | 361 | 413 |
| Example 1 | Packing density (g/cc) | 0.435 | 0.577 | 0.692 | 0.799 | 0.905 | 1.018 | 1.134 | 1.267 |
| | Electrical conductivity (S/cm) | 25.75 | 39.8 | 51.71 | 62.86 | 74.0 | 85.51 | 98 | 112 |
| Comparative Example 1 | Packing density (g/cc) | 0.372 | 0.495 | 0.59 | 0.675 | 0.754 | 0.834 | 0.915 | 0.999 |
| | Electrical conductivity (S/cm) | 16.25 | 25.17 | 32.54 | 39.36 | 45.75 | 52.3 | 59.04 | 65.93 |
| Comparative Example 2 | Packing density (g/cc) | 0.412 | 0.531 | 0.629 | 0.717 | 0.797 | 0.874 | 0.956 | 1.039 |
| | Electri cal conduct ivity (S/cm) | 11. 14 | 20. 64 | 27. 78 | 34. 33 | 40. 48 | 46. 59 | 53. 17 | 59. 53 |
| Compara tive Example 3 | Packing density (g/cc) | 0.4 09 | 0.5 46 | 0.6 56 | 0.7 59 | 0.8 60 | 0.9 67 | 1.0 78 | 1.2 02 |
| | Electrical conductivity (S/cm) | 17.66 | 29.30 | 39.42 | 48.99 | 58.43 | 68.22 | 78.88 | 90.4 |

[Table 2]

|  | Slope when electrical conductivity (S/cm) and packing density (g/cc) are each plotted on a y-axis and an x-axis | Bulk density (g/cc) |
|---|---|---|
| Example 1 | 104 | 0.009 |
| Comparative Example 1 | 80 | 0.008 |
| Comparative Example 2 | 77 | 0.034 |
| Comparative Example 3 | 92 | 0.019 |

**Experimental Example 2: Measurement of electrode layer resistivity (Ω•cm)**

1) Preparation of dry electrode: The expandable carbon nanotube powders prepared in Example 1 and Comparative Examples 1 to 3 were prepared as conductive materials. Thereafter, lithium nickel cobalt manganese aluminum oxide (LNF) as an electrode active material, each of the conductive materials described above, and polytetrafluoroethylene (PTFE) as a fibrillizable binder were added into a blender and mixed at 1500 rpm for 10 minutes to prepare each material mixture composition.

Thereafter, the material mixture composition was added into a kneader and kneaded at a rotation speed of 50 rpm for 10 minutes at 1.1 atm and 150°C to prepare a mixed aggregate, and the mixed aggregate was added into a blender, pulvarized at 5000 rpm for 10 minute, and classified through a sieve having a pore size of 1 mm to prepare a powder for an electrode of Example 1 and Comparative Examples 1 to 3.

The powder for an electrode was sheeted onto a calendaring roll (roll diameter: 88 mm, roll temperature: 100°C) in a roll-to-roll process to prepare an electrode material mixture film. Thereafter, one sheet of the electrode material mixture film was placed on one side of aluminum foil (thickness: 15 μm) having a conductive primer layer formed thereon and subjected to lamination through a roll press maintained at 100°C to prepare a dry electrode. In this case, the electrode material mixture film had a porosity of 23.5%.

(2) Measurement of electrode layer resistivity : The prepared dry electrode was cut into a size of 30 mm x 50 mm, and a current of 100 μA was applied to the electrode using an MP resistance measurement method. The resistivity (Qcm) value at any point within the electrode material mixture film was measured six times based on the potential difference measured between 46 probes, and an average value was calculated.

The measurement results are shown in Table 3.

[Table 3]

|  | Electrode layer resistivity (Ωcm) |
|---|---|
| Example 1 | 12.8 |
| Comparative Example 1 | 37.9 |
| Comparative Example 2 | 34.2 |
| Comparative Example 3 | 23.1 |

Referring to Table 3 above, it is seen that Example 1, which satisfies the slope range described above has superior electrode layer resistivity compared to Comparative Examples 1 to 3.

**Claims**

1. An expandable carbon nanotube powder comprising carbon nanotube units,

   wherein when electrical conductivity (S/cm) and packing density (g/cc) are plotted on a y-axis and an x-axis, respectively, slope is 95 or greater, and
   the electrical conductivity (S/cm) and the packing density (g/cc) are measured while applying a pressure ranging from 50 MPa to 420 MPa to the expandable carbon nanotube powder.

2. The expandable carbon nanotube powder of claim 1, wherein the slope ranges from 100 to 125.

3. The expandable carbon nanotube powder of claim 1, having a bulk density of 0.022 g/cc or less.

4. The expandable carbon nanotube powder of claim 1, wherein when the packing density of the expandable carbon nanotube powder is 1.0 g/cc, the electrical conductivity is 70 S/cm or greater.

5. The expandable carbon nanotube powder of claim 1, wherein a ratio (TD/BD) of true density (TD) to bulk density (BD) of the expandable carbon nanotube powder is 91 to 673.

6. The expandable carbon nanotube powder of claim 1, having a true density (TD) of 1.850 g/cc to 2.500 g/cc.

7. The expandable carbon nanotube powder of claim 1, having a BET specific surface area of 200 $m^2$/g to 1000 $m^2$/g.

8. The expandable carbon nanotube powder of claim 1, wherein the carbon nanotube units are multi-walled carbon nanotube units.

9. The expandable carbon nanotube powder of claim 8, wherein the multi-walled carbon nanotube units have an aspect ratio of 30 to 10000.

10. The expandable carbon nanotube powder of claim 8, wherein the multi-walled carbon nanotube units have an average length of 0.1 $\mu$m to 100 $\mu$m.

11. The expandable carbon nanotube powder of claim 8, wherein the multi-walled carbon nanotube units have an average diameter of 5 nm to 200 nm.

12. The expandable carbon nanotube powder of claim 8, wherein the multi-walled carbon nanotube units have a BET specific surface area of 50 $m^2$/g to 500 $m^2$/g.

13. The expandable carbon nanotube powder of claim 8, wherein the multi-walled carbon nanotube units have three or more graphene layers disposed in parallel with respect to an axis of the multi-walled carbon nanotube units.

14. A dry electrode comprising the expandable carbon nanotube powder of claim 1.

15. A lithium secondary battery comprising the dry electrode of claim 14.

FIG.1

FIG.2

5.0kV 9.2mm x1.00k SE(U)    50.0um

FIG.3

FIG.4

5.0kV 15.1mm x2.00k SE(M)        20.0um

FIG.5

# EP 4 769 573 A1

## INTERNATIONAL SEARCH REPORT

| International application No. |
| --- |
| **PCT/KR2025/008439** |

| | |
| --- | --- |
| **A.** | **CLASSIFICATION OF SUBJECT MATTER** |

**H01M 4/62**(2006.01)i; **C01B 32/158**(2017.01)i; **H01M 4/13**(2010.01)i; **H01M 10/052**(2010.01)i; **H01M 4/04**(2006.01)i; **C01B 32/174**(2017.01)i; **H01M 4/136**(2010.01)i; **H01M 4/02**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

H01M 4/62(2006.01); B01J 13/04(2006.01); B01J 23/28(2006.01); C01B 31/02(2006.01); C01B 32/158(2017.01); C01B 32/174(2017.01); C04B 35/52(2006.01); C04B 35/626(2006.01); H01M 4/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지 (lithium secondary battery), 건식 (dry method), 팽창형 탄소 나노 튜브 (expandable carbon nano tube), 전기 전도도 (electrical conductivity), 충진 밀도 (tap density)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | KR 10-2020-0135499 A (NISSAN CHEMICAL CORPORATION) 02 December 2020 (2020-12-02)<br>claims 1, 6; paragraphs [0048]-[0051], [0055], [0267] | 1-15 |
| A | WO 2023-167889 A1 (FASTCAP SYSTEMS CORPORATION) 07 September 2023 (2023-09-07)<br>abstract; claims 1, 106 | 1-15 |
| A | CN 104925778 B (SUZHOU INSTITUTE OF NANO-TECH AND NANO-BIONICS, CHINESE ACADEMY OF SCIENCES) 03 May 2017 (2017-05-03)<br>abstract; claims 1-15 | 1-15 |
| A | KR 10-2017-0024432 A (KOREA INSTITUTE OF CARBON CONVERGENCE TECHNOLOGY) 07 March 2017 (2017-03-07)<br>abstract; claims 1, 3 | 1-15 |
| A | KR 10-2020-0075513 A (MORGAN KOREA CO., LTD.) 26 June 2020 (2020-06-26)<br>abstract; claims 1-10 | 1-15 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 September 2025** | **16 September 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/008439**

| Patent document cited in search report | | | Publication date (day/month/year) | Patent family member(s) | | | Publication date (day/month/year) |
|---|---|---|---|---|---|---|---|
| KR | 10-2020-0135499 | A | 02 December 2020 | CN | 111919314 | A | 10 November 2020 |
| | | | | EP | 3783696 | A1 | 24 February 2021 |
| | | | | EP | 3783696 | A4 | 29 December 2021 |
| | | | | JP | 7318638 | B2 | 01 August 2023 |
| | | | | US | 2021-0020952 | A1 | 21 January 2021 |
| | | | | WO | 2019-188538 | A1 | 03 October 2019 |
| WO | 2023-167889 | A1 | 07 September 2023 | CN | 119096319 | A | 06 December 2024 |
| | | | | EP | 4487356 | A1 | 08 January 2025 |
| | | | | JP | 2025-513941 | A | 01 May 2025 |
| | | | | KR | 10-2025-0003524 | A | 07 January 2025 |
| | | | | US | 2025-192187 | A1 | 12 June 2025 |
| CN | 104925778 | B | 03 May 2017 | CN | 104925778 | A | 23 September 2015 |
| | | | | CN | 105374991 | A | 02 March 2016 |
| | | | | CN | 105374991 | B | 18 October 2019 |
| | | | | EP | 3133047 | A1 | 22 February 2017 |
| | | | | EP | 3133047 | A4 | 25 October 2017 |
| | | | | EP | 3133047 | B1 | 03 June 2020 |
| | | | | EP | 3133047 | B8 | 22 July 2020 |
| | | | | JP | 2017-517467 | A | 29 June 2017 |
| | | | | JP | 6445585 | B2 | 26 December 2018 |
| | | | | KR | 10-1900780 | B1 | 20 September 2018 |
| | | | | KR | 10-2016-0145605 | A | 20 December 2016 |
| | | | | US | 10868298 | B2 | 15 December 2020 |
| | | | | US | 2017-110719 | A1 | 20 April 2017 |
| | | | | WO | 2015-139660 | A1 | 24 September 2015 |
| KR | 10-2017-0024432 | A | 07 March 2017 | KR | 10-1790845 | B1 | 26 October 2017 |
| KR | 10-2020-0075513 | A | 26 June 2020 | KR | 10-2243846 | B1 | 23 April 2021 |
| | | | | US | 2020-0196435 | A1 | 18 June 2020 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240079211

- KR 1020240079212